(19) Europäisches Patentamt
European Patent Office
Office européen des brevets

(11) **EP 1 181 780 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(51) Int Cl.:
***H04B 1/707*** *(2006.01)*

(21) Anmeldenummer: **01915142.2**

(22) Anmeldetag: **17.01.2001**

(86) Internationale Anmeldenummer:
**PCT/EP2001/000494**

(87) Internationale Veröffentlichungsnummer:
**WO 2001/054322 (26.07.2001 Gazette 2001/30)**

(54) **CDMA-EMPFÄNGER**

CDMA RECEIVER

RECEPTEUR AMRC

(84) Benannte Vertragsstaaten:
**AT BE CH CY DE DK ES FI FR GB GR IE IT LI LU MC NL PT SE TR**

(30) Priorität: **17.01.2000 DE 10001649**

(43) Veröffentlichungstag der Anmeldung:
**27.02.2002 Patentblatt 2002/09**

(73) Patentinhaber: **Infineon Technologies AG**
**81669 München (DE)**

(72) Erfinder:
• **DOETSCH, Markus**
**CH-3098 Schliern (CH)**
• **KELLA, Tideya**
**80337 München (DE)**

• **SCHMIDT, Peter**
**67167 Erpolzheim (DE)**
• **JUNG, Peter**
**67697 Otterberg (DE)**
• **PLECHINGER, Joerg**
**80469 München (DE)**
• **SCHNEIDER, Michael**
**81541 München (DE)**

(74) Vertreter: **Reinhard - Skuhra - Weise & Partner**
**Friedrichstrasse 31**
**80801 München (DE)**

(56) Entgegenhaltungen:
**US-A- 5 812 542**

**Beschreibung**

Die Erfindung betrifft einen CDMA-Empfänger zum Empfangen eines mit Chiptakt von einem Sender über verschiedene Signalpfade eines physikalischen Übertragungskanals übertragenen CDMA-Signals.

Das CDMA-Verfahren (CDMA: Code Division Multiple Access) ist ein Kanalzugriffsverfahren, das in zellularen Systemen, insbesondere im Mobilfunkbereich, eingesetzt wird. Dabei wird ein schmalbandiges Signal mittels Code zu einem breitbandigen Signal gespreizt. Die Teilnehmersignale der gleichzeitig im selben Teilnehmerfrequenzband aktiven Teilnehmer werden durch Aufprägen von teilnehmerspezifischen CDMA-Codes bandgespreizt. Beim CDMA-Verfahren wird jedem Datensymbol ein möglichst unverwechselbarer Fingerabdruck aufgedrückt. Dies kann durch Verwendung orthogonaler OVSF-Codierer erreicht werden.

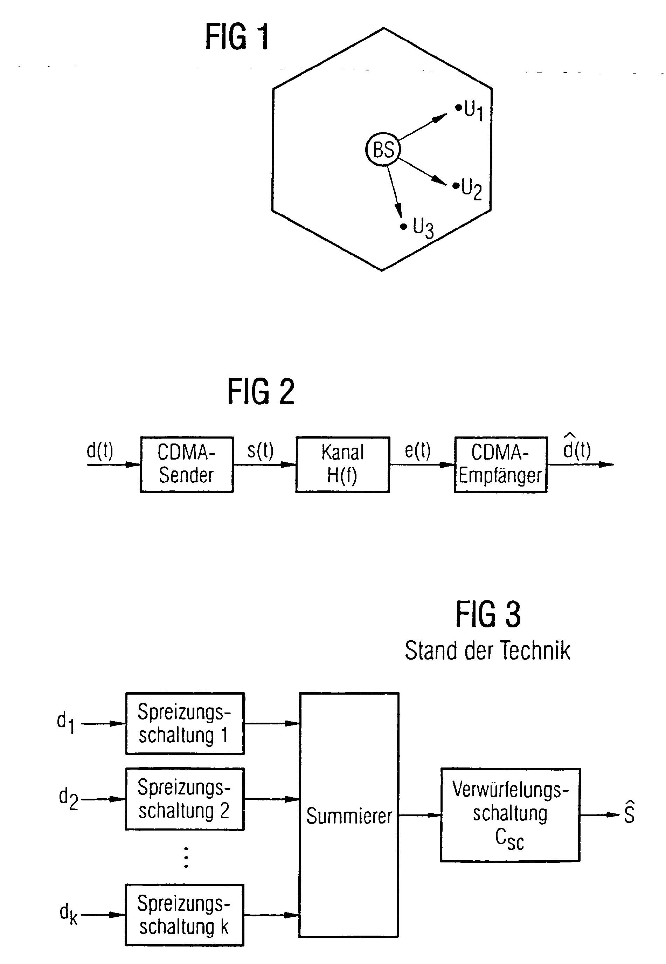

Fig. 1 zeigt eine Zelle eines zellular aufgebauten Mobilfunksystems, bei dem sich drei Teilnehmer bzw. User U1, U2, U3 innerhalb einer Mobilfunkzelle befinden und von der Basisstation BS ein CDMA-Sendesignal empfangen. Ein Teilnehmer U erhält ein CDMA-Signal von der Basisstation BS über eine physikalische Kanalstrecke H. Der physikalische Kanal H umfaßt eine Vielzahl von Signalausbreitungspfaden, die beispielsweise aufgrund von Reflexionen oder Signalstreuungen entstehen.

Fig. 2 zeigt ein einfaches Modell der Datenübertragung von der Basisstation zu einem Teilnehmer U. In der Basisstation wird ein Datenstrom d(t) erzeugt, die durch einen CDMA-Sender der Basisstation gespreizt, codiert und zu einem Sendesignal S(t) verwürfelt bzw. gescrambelt werden. Das Sendesignal gelangt über den physikalischen Kanal H als Empfangssignal e(t) zu dem CDMA-Empfänger des Teilnehmers. In dem CDMA-Empfänger erfolgt die Entwürfelung sowie die Entspreizung bzw. Decodierung des Empfangssignals zu einem geschätzten Datenstrom $\hat{d}$(t), der idealerweise dem Datenstrom d(t) entspricht, die der CDMA-Sender erhält.

Fig. 3 zeigt einen CDMA-Sender nach dem Stand der Technik. Der Sender erhält von verschiedenen Datenquellen parallel Datenströme d1, d2, ... $d_k$, die für verschiedene Teilnehmer bestimmt sind. Die Datenströme d werden in einer zugehörigen Spreizungsschaltung mit paarweise orthogonalen OVSF-Codes gespreizt und codiert. Die gespreizten und codierten Datenströme werden einem Summierer zugeführt. Der Summierer überlagert die verschiedenen gespreizten und codierten Datenströme und gibt den aufsummierten Datenstrom an eine Scrambling- bzw. Verwürfelungsschaltung ab. Der überlagerte Datenstrom wird gescrambelt bzw. verwürfelt und von der Basisstation BS als Sendedatenstrom s an die Teilnehmer U abgesendet. Die Verwürfelung bzw. das Scrambeln dient zur Identifikation der Basisstation BS durch die Teilnehmer.

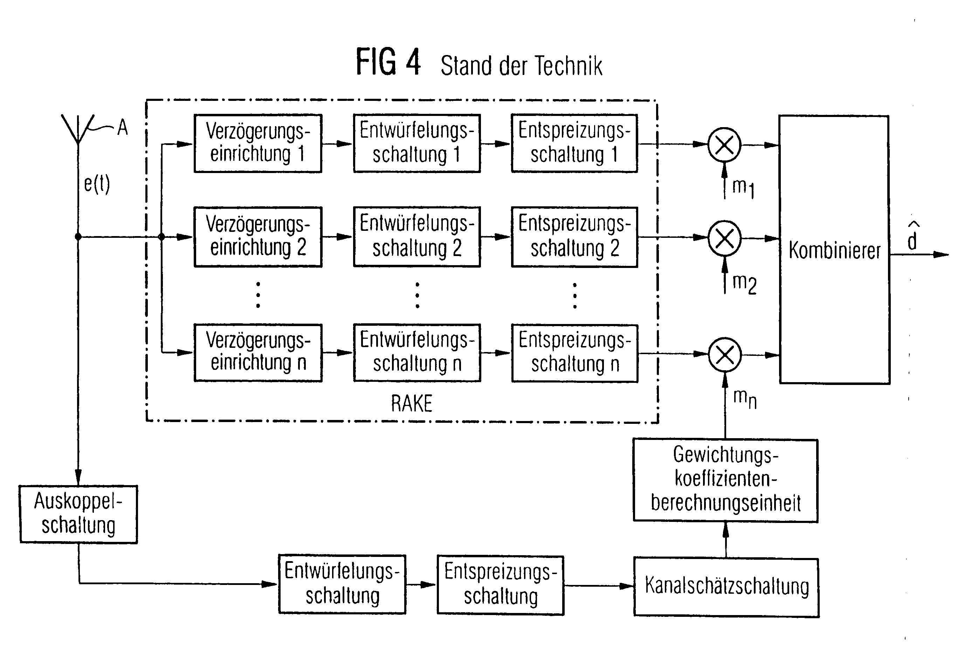

Fig. 4 zeigt einen CDMA-Emfänger nach dem Stand der Technik. Das von dem Teilnehmer U über eine Empfangsantenne A empfangene CDMA-Empfangssignal e(t) wird einer Rake-Empfangsschaltung zugeführt. Die Rake-Empfangsschaltung weist mehrere parallel zueinander verlaufende Signalpfade auf, die jeweils aus einer Verzögerungseinrichtung, einer Entwürfelungsschaltung und einer Entspreizungsschaltung bestehen. Die verschiedenen parallel geschalteten Signalpfade werden auch als Rake-Finger bezeichnet. Durch die Rake-Empfangsschaltung werden die verschiedenen Signalkomponenten des übertragenen CDMA-Sendesignals, die aufgrund der verschiedenen Signalpfade des physikalischen Übertragungskanals entstehen, erfaßt. Dabei berücksichtigen die Verzögerungseinrichtung die verschiedenen Signallaufzeitverzögerungen auf den unterschiedlichen Signalpfaden des Übertragungskanals. Die Verzögerungszeiten der Verzögerungseinrichtungen sind einstellbar und während des Empfangs des CDMA-Signals an den Übertragungskanal adaptierbar. Die verschiedenen Signalkomponenten des CDMA-Empfangssignals werden in den verschiedenen Rake-Fingern entwürfelt bzw. descrambelt und anschließend mittels eines OVSF-Codes entspreizt. Ausgangsseitig werden die durch die Rake-Finger erfaßten CDMA-Signalkomponenten durch Multiplizierer mit Gewichtungskoeffizienten multipliziert und in einem Kombinierer zu einem Schätzdatensignal $\hat{d}$ zusammengesetzt. Der Kombinierer ist eine Additionsschaltung, die die verschiedenen gewichteten Signalkomponenten addiert. Die Gewichtungskoeffizienten m werden in einer Gewichtungskoeffizienten-Berechnungseinheit auf der Grundlage von geschätzten Kanalkoeffizienten h berechnet, die durch eine Kanalschätzschaltung ermittelt werden. Hierzu wird aus dem CDMA-Empfangssignal e(t) eine Referenzdatensequenz durch eine Auskoppelschaltung ausgekoppelt, in einer Entwürfelungsschaltung entwürfelt bzw. descrambelt und nach erfolgter Entspreizung bzw. Despreading in einer Entspreizungsschaltung der Kanalschätzschaltung zugeführt.

Ein solcher CDMA Empfänger wird im Patent US 5,812,542 geoffenbart.

Der in Fig. 4 gezeigte CDMA-Empfänger nach dem Stand der Technik weist jedoch den Nachteil auf, dass Signalinterferenzen zwischen verschiedenen Teilnehmern bzw. Nutzern innerhalb einer Mobilfunkzelle nicht eliminiert werden können. Der in Fig. 4 dargestellte CDMA-Empfänger eignet sich nur zur Einzelteilnehmerdetektion, wobei die Intersymbol-Interferenz und die Vielfachzugriffsinterferenzen zwischen den Teilnehmern nicht beseitigt werden und somit nur eine geringe Spektrumseffizienz erzielbar ist. Der in Fig. 4 gezeigte CDMA-Empfänger verfügt über keine Daten über die Spreizungscodes $C_{SP}$ der übrigen Teilnehmer in der Zelle. Er kann daher Störungen, die aufgrund von Sendesignalen zu weiteren Teilnehmern in der Zelle entstehen, nicht berücksichtigen oder unterdrücken.

Es ist daher die Aufgabe der vorliegenden Erfindung, einen CDMA-Empfänger zu schaffen, bei dem Signalinterferenzen, die durch Sendesignale weiterer Teilnehmer hervorgerufen werden, beseitigt werden.

Diese Aufgabe wird erfindungsgemäß durch einen CDMA-Empfänger mit den in Patentanspruch 1 angegebenen Merkmalen gelöst.

Die Erfindung schafft einen CDMA-Empfänger zum Empfangen eines mit Chiptakt von einem Sender über verschiedene Signalpfade eines physikalischen Übertragungskanals übertragenen CDMA-Signals in einer Mehrteilnehmerumgebung, mit

einer Empfangseinrichtung zum Empfang eines CDMA-Signals, einer Rake-Empfangsschaltung mit mehreren parallel geschalteten Verzögerungseinrichtung zur Detektion von über verschiedene Signalpfade übertragenen Signalkomponenten des CDMA-Signals,

einer Kanalschätzschaltung zur Schätzung von Kanalkoeffizienten eines kombinierten Übertragungskanals mittels einer in dem empfangenen CDMA-Signal enthaltenen vorbestimmten Referenzdatensequenz,

einer Koeffizientenberechnungseinrichtung zur Berechnung von Gewichtungskoeffizienten für die verschiedenen Signalkomponenten des CDMA-Signals in Abhängigkeit von den geschätzten Kanalkoeffizienten und abgespeicherten Spreizungs- und Verwürfelungscodes,

einer Gewichtungsschaltung zur Gewichtung der Signalkomponenten mit den berechneten Gewichtungskoeffizienten, und mit einem Kombinierer zum Zusammensetzen der gewichteten Signalkomponenten zu einem geschätzten Empfangsdatensignal für die weitere Datenverarbeitung.

Ein Vorteil des erfindungsgemäßen CDMA-Empfängers besteht darin, dass die herkömmliche RAKE-Empfänger-Struktur beibehalten werden kann.

Durch den erfindungsgemäßen CDMA-Empfänger werden wirksam Signalinterferenzen zwischen verschiedenen Teilnehmern in einer Zelle beseitigt. Hierdurch kann die Anzahl der Teilnehmer innerhalb einer Zelle erhöht werden, und die Daten können mit einer höheren Datenrate an die Teilnehmer von der Basisstation aus übertragen werden. Aufgrund der Unterdrückung von Vielfachzugriffsinterferenzen wird auch die Bitfehlerrate durch den erfindungsgemäßen CDMA-Empfänger gesenkt.

Die Gewichtungskoeffizienten-Berechnungseinrichtung ist vorzugsweise an eine Speichereinrichtung angeschlossen.

Die Speichereinrichtung speichert vorzugsweise Spreizungscodes der übrigen Teilnehmer sowie den Verwürfelungscode bzw. den Scrambling-Code des Senders ab.

Bei einer bevorzugten Ausführungsform ist der Kombinierer ein Addierer zur Addition der gewichteten Signalkomponenten.

Die Referenzdatensequenz wird vorzugsweise durch die Kanalschätzschaltung mit Chiptakt verarbeitet.

Die Verzögerungseinrichtungen der Rake-Empfangsschaltung verzögern das Empfangen des CDMA-Signals mit einer zugehörigen Zeitverzögerung, wobei sich die Zeitverzögerung zwischen den verschiedenen Verzögerungseinrichtungen vorzugsweise um genau einen Chiptakt unterscheidet.

Die Empfangseinrichtung weist vorzugsweise eine Empfangsantenne und eine Abtastschaltung zum Abtasten des empfangenen CDMA-Signals auf.

vorzugsweise ist ferner eine Auskoppelschaltung zum Auskoppein der Referenzdatensequenz aus dem empfangenen CDMA-Signal vorgesehen.

Bei einer bevorzugten Ausführungsform des erfindungsgemäßen CDMA-Empfängers besteht die Gewichtungsschaltung aus einer Vielzahl von Multiplikationsschaltungen, die jeweils einer Verzögerungseinrichtung nachgeschaltet sind.

Bei einer besonders bevorzugte Ausführungsform des erfindungsgemäßen CDMA-Empfängers ist ein Zwischenspeicher zum Zwischenspeichern der abgetasteten CDMA-Empfangsdaten vorgesehen.

Die Kanalschätzschaltung und die Gewichtungskoeffizientenberechnungseinheit werden vorzugsweise durch einen Ablauf eines entsprechenden Algorithmuses in einem DSP-Prozessor realisiert.

Im weiteren wird eine bevorzugten Ausführungsform des erfindungsgemäßen CDMA-Empfängers zur Erläuterung erfindungswesentlicher Merkmale unter Bezugnahme auf die beigefügten Figuren beschrieben.

Es zeigen:

Fig. 1    eine schematische Darstellung einer Mobilfunkzelle mit mehreren Teilnehmern;

Fig. 2    ein einfaches Datenkanalmodell;

Fig. 3    ein CDMA-Sender nach dem Stand der Technik;

Fig. 4    einen CDMA-Empfänger nach dem Stand der Technik;

Fig. 5    eine bevorzugte Ausführungsform des erfindungsgemäßen CDMA-Empfängers.

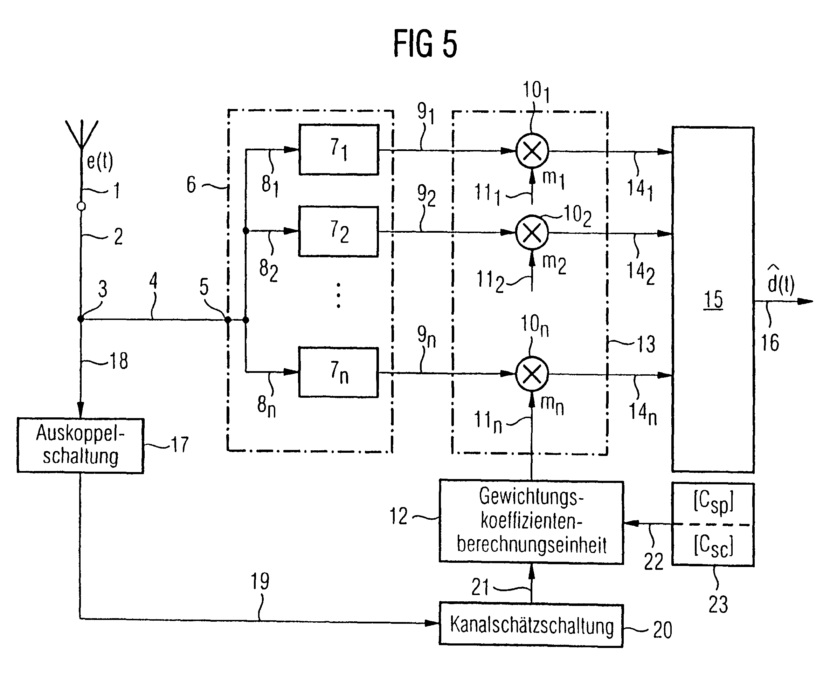

Wie aus Fig. 5 zu erkennen, weist der erfindungsgemäße CDMA-Empfänger eine Empfangsantenne 1 auf, die zum Empfang eines von einer Basisstation abgesendeten CDMA-Signals dient, das durch die Antenne 1 als Empfangssignal e(t) empfangen wird. Die Antenne 1 gibt das empfangene CDMA-Signal e(t) über eine Leitung 2 an einen Auskoppelknoten 3 ab, der über eine Leitung 4 mit einem Signaleingang 5 einer Rake-Empfangsschaltung 6 verbunden ist. Die Rake-Empfangsschaltung 6 weist eine Vielzahl von Verzögerungseinrichtung $7_1$, $7_2$, $7_n$ auf. Die Verzögerungseinrichtungen 7 sind zueinander über interne Signalleitungen $8_1$, $8_2$, $8_n$ parallel geschaltet, wobei die Signalleitungen 8 mit dem Signaleingang 5 der Rake-Empfangsschaltung 6 verbunden sind. Die Verzögerungseinrichtungen $7_1$-$7_n$ sind ausgangsseitig über Leitungen $9_1$-$9_n$ mit Multiplikationsschaltungen $10_1$-$10_n$ verbunden. Die Multiplikationsschaltungen $10_1$-$10_n$ multiplizieren jeweils die von den Verzögerungseinrichtungen $7_1$-$7_n$ abgegebenen Signalkomponenten des CDMA-Empfangssignals mit Gewichtungskoeffizienten $m_1$-$m_n$, die über Leitungen $11_1$-$11_n$ von einer Gewichtungskoeffizienten-Berechnungseinrichtung 12 abgegeben werden. Die Multiplikatorschaltungen $10_1$-$10_n$ bilden zusammen eine Gewichtungsschaltung 13. Die durch die Multiplikatoren $10_1$-$10_n$ abgegebenen Signalkomponenten werden über Leitungen $14_1$-$14_n$ an einen Kombinierer 15 abgegeben, der die verschiedenen gewichteten Signalkomponenten zu einem geschätzten Empfangsdatensignal $\hat{d}$ (t) zusammensetzt, das über eine Datenleitung 16 zur weiteren Datenverarbeitung in dem Empfänger abgegeben wird.

Das über die Antenne 1 empfangene CDMA-Signal e(t) enthält eine Referenzdatensequenz, die durch eine Auskoppelschaltung 17 am Auskoppelpunkt 3 ausgekoppelt wird. Die Auskoppelschaltung 17 ist hierzu über eine Leitung 18 mit dem Auskoppelknoten 3 verbunden. Die durch die Auskoppelschaltung 17 ausgeKoppelte Referenzdatensequenz wird über eine Leitung 19 direkt einer Kanalschätzschaltung 20 zugeführt. Die Kanalschätzschaltung schätzt die Kanalkoeffizienten h des physikalischen Übertragungskanals H mittels der ausgekoppelten Referenzdatensequenz und gibt die ermittelten Kanalkoeffizienten h über eine Leitung 21 an die Gewichtungskoeffizienten-Berechnungseinrichtung 12 ab.

Die Gewichtungskoeffizienten-Berechnungseinrichtung 12 ist über eine Speicherausleseleitung 22 mit einer Speichereinrichtung 23 verbunden. In der Speichereinrichtung 23 sind die Spreizungscodes $C_{SP}$ für die übrigen Teilnehmer U sowie der Verwürfelungscode bzw. der Scrambling-Code $C_{SC}$ der Basisstationen BS abgespeichert. Die Gewichtungskoeffizienten-Berechnungseinrichtung 12 berechnet die Gewichtungskoeffizienten m für die verschiedenen Signalkomponenten des CDMA-Signals in Abhängigkeit von den geschätzten Kanalkoeffizienten h sowie den abgespeicherten Spreizungscodes $C_{SP}$ und Verwürfelungscodes $C_{SC}$. Die berechneten Gewichtungskoeffizienten m werden über Leitung $11_1$-$11_n$ an die verschiedenen Multiplikatorschaltungen $10_1$-$10_n$ der Gewichtungsschaltung 13 abgegeben und dort mit den von den Verzögerungseinrichtungen $7_1$-$7_n$ abgegebenen Signalkomponenten multipliziert. Die derart gewichteten Signalkomponenten werden in dem Kombinierer 15 miteinander zu einem Schätzempfangsdatenstrom $\hat{d}$ (t) kombiniert. Der Kombinierer 15 ist dabei vorzugsweise ein Addierer, der die verschiedenen gewichteten Signalkomponenten aufsummiert.

Durch die Antenne 1 wird ein CDMA-Empfangssignal durch den Empfänger empfangen, das von dem Sendesignal s und dem physikalischen Übertragungskanal H abhängt. Der physikalische Übertragungskanal kann als eine aus vielen Kanalkoeffizienten h bestehende Datenmatrix. H dargestellt werden. In Vektorschreibweise ergibt sich der Empfangsdatenvektor e zu:

$$\vec{e} \;=\; [H] \cdot \vec{s} \qquad (1)$$

Der CDMA-Empfänger kann ebenfalls als Datenmatrix M dargestellt werden, wobei sich der Schätzdatenvektor aus dem Empfangsdatenvektor ergibt zu:

$$\vec{\hat{d}} \;=\; [M] \cdot \vec{e} \qquad (2)$$

Somit hängt der Schätzdatenvektor $\hat{d}$ von der Datenmatrix H des physikalischen Übertragungskanals sowie der Empfängermatrix M ab.

$$\vec{\hat{d}} \;=\; [M] \cdot [H] \; \vec{s} \qquad (3)$$

Der Sendedatenvektor hängt von dem ursprünglich von einer Datenquelle an den Sender abgegebenen Daten d sowie dem Spreizungscode $C_{SP}$ und dem Scrambling-Code $C_{SC}$ ab. Im Sender wird, wie bereits in Zusammenhang mit Fig. 3 erläutert, der Datenstrom d zunächst mit einem Spreizungscode $C_{SP}$ gespreizt und anschließend in einer Verwürfelungsschaltung mit einem Verwürfelungs- bzw. Scrambling-Code $C_{SC}$ verwürfelt.

Somit ergibt sich der Schätzdatenvektor zu:

$$\bar{\bar{d}} = [M][H][C_{SP}][C_{SC}] \cdot \bar{d} \qquad (4)$$

Indem man den physikalischen Übertragungskanal (t) sowie die Spreizungsschaltung und die Verwürfelungsschaltung als einen zusammengesetzten bzw. kombinierten Kanal betrachtet, ergibt sich die Koeffizientenmatrix des zusammengesetzten bzw. kombinierten Kanals H' zu:

$$[H'] = [H][C_{SP}][C_{SP}] \qquad (5)$$

Der Empfangsschätzdatenvektor $\hat{d}$ hängt somit von der Koeffizientenmatrix des Empfängers M sowie der Koeffizientenmatrix H' des zusammengesetzten Kanals ab.

$$\bar{\bar{d}} = [M] \cdot [H'] \cdot \bar{d} \qquad (6)$$

Bei einem angenommenen, ideal geschätzten physikalischen Übertragungskanal müssen die Koeffizienten m der Empfängermatrix M derart durch die Gewichtungskoeffizienten-Berechnungseinrichtung 12 eingestellt werden, dass gilt:

$$[M] \cdot [H'] \rightarrow I \qquad (7)$$

wobei I der Einheitsmatrix entspricht.

Die Signalkoeffizienten h des physikalischen Übertragungskanals H erhält die Gewichtungskoeffizienten-Berechnungseinrichtung 12 von der Kanalschätzschaltung 20 über die Leitung 21. Die Spreizungskoeffizienten $C_{SP}$ der orthogonalen OVSF-Codes der übrigen Teilnehmer sind in dem Speicher 23 abgespeichert und können über die Leitung 22 durch die Gewichtungskoeffizienten-Berechnungseinrichtung 12 ausgelesen werden.

Der Scrambling- bzw. Verwürfelungscode $C_{SC}$ der Basisstationen BS's ist ebenfalls in dem Speicher 23 abgespeichert und wird zur Berechnung der Kanalkoeffizienten des zusammengesetzten Kanals H' durch die Gewichtungskoeffizienten-Berechnungseinrichtung 12 ausgelesen.

Die Gewichtungskoeffizienten-Berechnungseinrichtung 12 enthält einen Prozessor, der die in Gleichung 7 angegebene Berechnung durchführt und die Gewichtungskoeffizienten m des Empfängers derart berechnet, dass das Produkt aus der Empfängermatrix M und der Kanalkoeffizientenmatrix H' des zusammengesetzten Kanals sich der Einheitsmatrix I annähert.

Wie man durch Vergleich der Fig. 4, die den CDMA-Empfänger nach dem Stand der Technik darstellt, und der Fig. 5, die den erfindungsgemäßen CDMA-Empfänger darstellt, erkennen kann, ist der schaltungstechnische Aufbau des erfindungsgemäßen CDMA-Empfängers weniger komplex. Die Rake-Empfangsschaltung 6 des erfindungsgemäßen CDMA-Empfängers besteht lediglich aus den Verzögerungseinrichtungen $7_1$-$7_n$ und enthält keine Entwürfelungsschaltungen und Entspreizungsschaltungen für die jeweiligen Signalkomponenten. Darüber hinaus ist die Auskoppelschaltung 17 des erfindungsgemäßen CDMA-Empfängers direkt mit der Kanalschätzschaltung 20 über die Leitung 19 verbunden. Die Referenzdatensequenz, die durch die Auskoppelschaltung 17 ausgekoppelt wird, wird durch die Kanalschätzschaltung 20 mit Chiptakt $T_c$ verarbeitet und nicht mit Symboldatentakt $T_D$. Die Verzögerungseinrichtung $7_1$-$7_n$ der Rake-Empfangsschaltung 6 verzögern das empfangene CDMA-Signal e(t) mit einer zugehörigen Zeitverzögerung $\tau$, wobei die Zeitverzögerung $\tau$ zwischen den verschiedenen Verzögerungseinrichtungen $7_1$-$7_n$ sich um genau einen Chiptakt $T_c$ unterscheidet.

Der erfindungsgemäße CDMA-Empfänger verfügt über den Speicher 23, in dem die Spreizungs- bzw. Spreading-Codes $C_{SP}$ aller Teilnehmer und der Verwürfelungscodes $C_{sc}$ der Basisstationen BS abgespeichert sind. Hierdurch kann der erfindungsgemäße CDMA-Empfänger bei der Berechnung der Gewichtungskoeffizienten m die orthogonalen Spreizungscodes der übrigen Teilnehmer in der Zelle und somit deren Empfangssignal mitberücksichtigen. Dabei berechnet die Gewichtungskoeffizienten-Berechnungseinrichtung 12 die Gewichtungskoeffizienten m derart, dass Signalinterferenzen durch die an die übrigen Teilnehmer abgegebenen CDMA-Sendesignale unterdrückt bzw. beseitigt werden. Die Kanalschätzschaltung 20 schätzt dabei den Übertragungskanal H auf Chiptaktebene $T_C$ und nicht auf Datensymbolebene $T_D$.

Durch die abgespeicherten Spreading-bzw. Spreizungscodes der übrigen Teilnehmer ermöglicht der erfindungsgemäße CDMA-Empfänger eine Mehrteilnehmerdetektion, die sowohl Intersymbolinterferenz als auch Vielfachzugriffsinterferenz berücksichtigt und somit eine erhöhte Spektrumeffizienz aufweist.

Bezugszeichenliste

| 1 | Antenne |
|---|---|
| 2 | Leitung |
| 3 | Auskoppelknoten |
| 4 | Leitung |
| 5 | Signaleingang |
| 6 | Rake-Empfangsschaltung |
| $7_1$-$7_n$ | Verzögerungseinrichtungen |
| $8_1$-$8_n$ | Signalleitungen |
| $9_1$-$9_n$ | Signalleitungen |
| $10_1$-$10_n$ | Multiplikationsschaltungen |
| $11_1$-$11_n$ | Leitungen |
| 13 | Gewichtungsschaltung |
| $14_1$-$14_n$ | Signalleitungen |
| 15 | Kombinierer |
| 16 | Ausgangsleitung |
| 17 | Auskoppelschaltung |
| 18 | Leitung |
| 19 | Leitung |
| 20 | Kanalschätzschaltung |
| 21 | Leitung |
| 22 | Speicherausleseleitung |
| 23 | Speichereinrichtung |

**Patentansprüche**

1. CDMA-Empfänger zum Empfangen eines mit Chiptakt von einem Sender über verschiedene Signalpfade eines physikalischen Übertragungskanals übertragenen CDMA-Signals in einer Mehrteilnehmerumgebung mit:

(a) einer Empfangseinrichtung (1) zum Empfang des CDMA-Signals;
(b) einer Rake-Empfangsschaltung (6) mit mehreren parallel geschalteten Verzögerungseinrichtungen ($7_1$-$7_n$) zur Detektion der über die verschiedenen Signalpfade übertragenen Signalkomponenten des CDMA-Signals;
(c) einer Kanalschätzschaltung (20) zur Schätzung von Kanalkoeffizienten h eines Übertragungskanals H mittels einer in dem empfangenen CDMA-Signal enthaltenen vorbestimmten Referenzdatensequenz;
(d) einer Gewichtungskoeffizienten-Berechnungseinrichtung (12) zur Berechnung von Gewichtungskoeffizienten m für die verschiedenen Signalkomponenten des CDMA-Signals
(e) einer Gewichtungsschaltung (13) zur Gewichtung der Signalkomponenten mit den berechneten Gewichtungskoeffizienten m; und mit
(f) einem Kombinierer (15) zum Zusammensetzen der gewichteten Signalkomponenten zu einem geschätzten Empfangsdatensignal.

**dadurch gekennzeichnet,**
**dass** die Gewichtungskoeffizienten-Berechnungseinrichtung (12) geeignet ist, die Gewichtungskoeffizienten m in Abhängigkeit von

den geschätzten Kanalkoeffizienten h und abgespeicherten Spreizungs- und Verwürfelungscodes zu berechnen.

**2.** CDMA-Empfänger nach Anspruch 1,
**dadurch gekennzeichnet,**
**dass** die Gewichtungskoeffizienten-Berechnungseinrichtung (12) an einer Speichereinrichtung (23) angeschlossen ist.

**3.** CDMA-Empfänger nach Anspruch 1 oder 2,
**dadurch gekennzeichnet,**
**dass** in der Speichereinrichtung (23) Spreizungscodes $C_{SP}$ der Teilnehmer und Verwürfelungscodes $C_{SC}$ der Sender abgespeichert sind.

**4.** CDMA-Empfänger nach einem der vorangehenden Ansprüche,
**dadurch gekennzeichnet,**
**dass** der Kombinierer (15) ein Addierer zum Addieren der gewichteten Signalkomponenten ist.

**5.** CDMA-Empfänger nach einem der vorangehenden Ansprüche,
**dadurch gekennzeichnet,**
**dass** die Referenzdatensequenz durch die Kanalschätzschaltung (20) mit Chiptakt $T_c$ verarbeitet wird.

**6.** CDMA-Empfänger nach einem der vorangehenden Ansprüche,
**dadurch gekennzeichnet,**
**dass** die Verzögerungseinrichtungen ($7_1$-$7_n$) der Rake-Empfangsschaltung (6) das empfangene CDMA-Signal mit einer zugehörigen Zeitverzögerung $\tau$ verzögern, wobei die Zeitverzögerung $\tau$ zwischen den verschiedenen Verzögerungseinrichtungen sich um genau einen Chiptakt $T_C$ unterscheidet.

**7.** CDMA-Empfänger nach einem der vorangehenden Ansprüche,
**dadurch gekennzeichnet,**
**dass** die Empfangseinrichtung (1) eine Empfangsantenne ist,
der eine Abtastschaltung zum Abtasten des CDMA-Empfangssignals nachgeschaltet ist.

**8.** CDMA-Empfänger nach einem der vorangehenden Ansprüche,
**dadurch gekennzeichnet,**
**dass** eine Auskoppelschaltung (17) zum Auskoppein der Referenzdatensequenz aus dem empfangenen CDMA-Empfangssignal vorgesehen ist.

**9.** CDMA-Empfänger nach einem der vorangehenden Ansprüche,
**dadurch gekennzeichnet,**
**dass** die Gewichtungsschaltung (13) aus einer Vielzahl von Multiplikationsschaltungen ($10_1$-$10_n$) besteht, die jeweils einer Verzögerungseinrichtung ($7_1$-$7_n$) nachgeschaltet sind.

**10.** CDMA-Empfänger nach einem der vorangehenden Ansprüche,
**dadurch gekennzeichnet,**
**dass** ein Zwischenspeicher zum Zwischenspeichern der abgetasteten Empfangsdaten des CDMA-Empfangssignals vorgesehen ist.

**11.** CDMA-Empfänger nach einem der vorangehenden Ansprüche,
**dadurch gekennzeichnet,**
**dass** die Kanalschätzschaltung (20) ein DSP-Prozessor ist.

**12.** CDMA-Empfänger nach einem der vorangehenden Ansprüche,
**dadurch gekennzeichnet,**
**dass** die Gewichtungskoeffizienten-Berechnungseinrichtung (12) ein DSP-Prozessor ist.

**13.** CDMA-Empfänger nach einem der vorangehenden Ansprüche,
**dadurch gekennzeichnet,**
**dass** die Speichereinrichtung (23) ein RAM-Speicher ist.

**Claims**

1.  CDMA receiver for receiving a CDMA signal, which is transmitted at the chip clock rate from a transmitter via various signal paths of a physical transmission channel, in a multi-subscriber environment having:

    (a) a receiving device (1) for receiving the CDMA signal;
    (b) a Rake receiving circuit (6) having a number of parallel-connected delay devices ($7_1$-$7_n$) for detection of the signal components of the CDMA signal which are transmitted via the various signal paths;
    (c) a channel estimation circuit (20) for estimating channel coefficients h of a transmission channel H by means of a predetermined reference data sequence which is contained in the received CDMA signal;
    (d) a weighting coefficient calculation device (12) for calculating weighting coefficients m for the various signal components of the CDMA signal;
    (e) a weighting circuit (13) for weighting the signal components with the calculated weighting coefficients m; and having
    (f) a combiner (15) for combining the weighted signal components to form an estimated received data signal,

    **characterized**
    **in that** the weighting coefficient calculation device (12) is suitable for calculating weighting coefficients m as a function of the estimated channel coefficients h and of stored spreading and scrambling codes.

2.  CDMA receiver according to Claim 1,
    **characterized**
    **in that** the weighting coefficient calculation device (12) is connected to a memory device (23).

3.  CDMA receiver according to Claim 1 or 2,
    **characterized**
    **in that** spreading codes $C_{SP}$ of the subscriber and scrambling codes $C_{SC}$ from the transmitter are stored in the memory device (23).

4.  CDMA receiver according to one of the preceding claims,
    **characterized**
    **in that** the combiner (15) is an adder for adding the weighted signal components.

5.  CDMA receiver according to one of the preceding claims,
    **characterized**
    **in that** the reference data sequence is processed by the channel estimation circuit (20) at the chip clock rate $T_c$.

6.  CDMA receiver according to one of the preceding claims,
    **characterized**
    **in that** the delay devices ($7_1$-$7_n$) of the Rake receiving circuit (6) delay the received CDMA signal by an associated time delay $\tau$, with the time delay $\tau$ differing by precisely one chip clock cycle $T_c$ between the various delay devices.

7.  CDMA receiver according to one of the preceding claims,
    **characterized**
    **in that** the receiving device (1) is a receiving antenna, which is followed by a sampling circuit for sampling the CDMA received signal.

8.  CDMA receiver according to one of the preceding claims,
    **characterized**
    **in that** an output circuit (17) is provided for outputting the reference data sequence from the received CDMA received signal.

9.  CDMA receiver according to one of the preceding claims,
    **characterized**
    **in that** the weighting circuit (13) comprises a large number of multiplication circuits ($10_1$-$10_n$), which are each followed by a delay device ($7_1$-$7_n$).

10. CDMA receiver according to one of the preceding claims,

**characterized**
**in that** a buffer store is provided for buffer storing the sampled received data from the CDMA received signal.

11. CDMA receiver according to one of the preceding claims,
    **characterized**
    **in that** the channel estimation circuit (20) is a DSP processor.

12. CDMA receiver according to one of the preceding claims,
    **characterized**
    **in that** the weighting coefficient calculation device (12) is a DSP processor.

13. CDMA receiver according to one of the preceding claims,
    **characterized**
    **in that** the memory device (23) is an RAM memory.


**Revendications**

1. Récepteur AMRC pour la réception d'un signal AMRC transmis par un émetteur avec la fréquence de processeur par l'intermédiaire de différents trajets de signaux d'un canal de transmission physique dans un environnement à multiples abonnés et qui comporte :

   (a) un dispositif de réception (1) pour la réception d'un signal AMRC,
   (b) un circuit de réception en râteau (6) avec plusieurs dispositifs de retardement ($7_1$ à $7_n$) branchés en parallèle pour la détection de composantes du signal AMRC qui ont été transmises par différents trajets de signal,
   (c) un circuit d'estimation de canal (20) pour l'estimation de coefficients de canal h d'un canal de transmission H au moyen d'une séquence de données de référence prédéterminée contenue dans le signal AMRC reçu,
   (d) un dispositif de calcul de coefficients de pondération (12) pour le calcul de coefficients de pondération m pour les différentes composantes du signal AMRC,
   (e) un circuit de pondération (13) pour la pondération des composantes de signal avec les coefficients de pondération calculés m ; et
   (f) un dispositif de combinaison (15) pour réunir les composantes de signal pondérées en un signal de données reçues estimé,

   **caractérisé par le fait que**
   le dispositif de calcul de coefficients de pondération (12) convient au calcul des coefficients de pondération m en fonction des coefficients de canal estimés h et des codes d'étalement et de cryptage mémorisés.

2. Récepteur AMRC selon la revendication 1,
   **caractérisé par le fait que**
   le dispositif de calcul de coefficients de pondération (12) est raccordé à un dispositif de mémorisation (23).

3. Récepteur AMRC selon la revendication 1 ou 2,
   **caractérisé par le fait que**
   des codes d'étalement $C_{SP}$ des abonnés et des codes de cryptage $C_{SC}$ des émetteurs sont mémorisés dans le dispositif de mémorisation (23).

4. Récepteur AMRC selon l'une des revendications précédentes,
   **caractérisé par le fait que**
   le dispositif de combinaison (15) est un additionneur pour l'addition des composantes de signal pondérées.

5. Récepteur AMRC selon l'une des revendications précédentes,
   **caractérisé par le fait que**
   la séquence de données de référence est traitée par le circuit d'estimation de canal (20) avec la fréquence de processeur $T_c$.

6. Récepteur AMRC selon l'une des revendications précédentes,
   **caractérisé par le fait que**

les dispositifs de retardement ($7_1$ à $7_n$) du circuit de réception en râteau (6) retardent le signal AMRC reçu avec un retard associé $\tau$, le retard $\tau$ entre les différents dispositifs de retardement se distinguant d'exactement un cycle de processeur $T_C$.

7. Récepteur AMRC selon l'une des revendications précédentes,
   **caractérisé par le fait que**
   le dispositif de réception (1) est une antenne réceptrice en aval de laquelle est branché un circuit d'échantillonnage pour l'échantillonnage du signal AMRC reçu.

8. Récepteur AMRC selon l'une des revendications précédentes,
   **caractérisé par le fait que**
   un circuit de découplage (17) est prévu pour découpler du signal AMRC reçu la séquence de données de référence.

9. Récepteur AMRC selon l'une des revendications précédentes,
   **caractérisé par le fait que**
   le circuit de pondération (13) est constitué de plusieurs circuits de multiplication ($10_1$ à $10_n$) qui sont branchés à chaque fois en aval d'un dispositif de retardement ($7_1$ à $7_n$).

10. Récepteur AMRC selon l'une des revendications précédentes,
    **caractérisé par le fait que**
    une mémoire intermédiaire est prévue pour mémoriser temporairement les données reçues échantillonnées du signal AMRC reçu.

11. Récepteur AMRC selon l'une des revendications précédentes,
    **caractérisé par le fait que**
    le circuit d'estimation de canal (20) est un processeur de signal numérique DSP.

12. Récepteur AMRC selon l'une des revendications précédentes,
    **caractérisé par le fait que**
    le dispositif de calcul de coefficients de pondération (12) est un processeur de signal numérique DSP.

13. Récepteur AMRC selon l'une des revendications précédentes,
    **caractérisé par le fait que**
    le dispositif de mémorisation (23) est une mémoire (RAM).

# FIG 1

# FIG 2

$$d(t) \rightarrow \boxed{\begin{array}{c} \text{CDMA-} \\ \text{Sender} \end{array}} \xrightarrow{s(t)} \boxed{\begin{array}{c} \text{Kanal} \\ H(f) \end{array}} \xrightarrow{e(t)} \boxed{\begin{array}{c} \text{CDMA-} \\ \text{Empfänger} \end{array}} \xrightarrow{\hat{d}(t)}$$

# FIG 3

## Stand der Technik

## FIG 4  Stand der Technik

EP 1 181 780 B1

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5812542 A